(19) Europäisches Patentamt
European Patent Office
Office européen des brevets

(11) EP 2 451 070 A1

(12) **EUROPEAN PATENT APPLICATION**
published in accordance with Art. 153(4) EPC

(43) Date of publication:
09.05.2012 Bulletin 2012/19

(51) Int Cl.:
*H02M 7/48* (2007.01)    *H02J 3/38* (2006.01)
*H02P 9/04* (2006.01)

(21) Application number: 10793953.0

(22) Date of filing: 03.06.2010

(86) International application number:
PCT/JP2010/059456

(87) International publication number:
WO 2011/001783 (06.01.2011 Gazette 2011/01)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 29.06.2009 JP 2009153873

(71) Applicant: Yanmar Co., Ltd.
Osaka-shi, Osaka 530-0013 (JP)

(72) Inventor: MOTEGI, Shinichi
Osaka-shi
Osaka 530-0013 (JP)

(74) Representative: Harland, Linda Jane
Reddie & Grose
16 Theobalds Road
London
WC1X 8PL (GB)

(54) **POWER GENERATION SYSTEM**

(57) A power generation system is provided that implements an efficient, labor-saving system interconnection in which an engine generator system, an external power supply system, and a capacitor are connected in parallel to each other, without the conventional practice to change the configuration of the engine generator system or provide an additional circuit.

A power generation system 10 implements a system interconnection in which an engine generator system 10a, an external power supply system 50a, and a capacitor 14 are connected in parallel to each other. The power generation system 10 includes discontinuing means Q4 for discontinuing direct-current voltage control by which a direct current voltage Vc of the capacitor 14 is controlled when electric power Pa from a generator 12 is supplied to the capacitor 14 while direct current electric power Pe that an external power supply 50 supplies is lower than demand power Pd that a power generation system 10 is supposed to supply.

FIG.1

EP 2 451 070 A1

**Description**

Technical Field

The prevent invention relates to a power generation system that implements a system interconnection in which an engine generator system, an external power supply system, and a capacitor are connected in parallel to each other.

Background Art

Patent document 1, for example, listed below proposes a power generation system that implements a system interconnection in which a parallel connection is established among: an engine generator system to supply direct current electric power obtained through a rectifier circuit by conversion from alternating current power that is supplied from a generator driven by an engine (for example, a gas engine); an external power supply system to supply direct current electric power from an external power supply; and a capacitor.

Examples of the external power supply include external power supplies such as solar cells, fuel cells, and storage batteries, and external power supplies that convert alternating current power from a wind turbine into direct current electric power through a rectifier circuit or a converter.

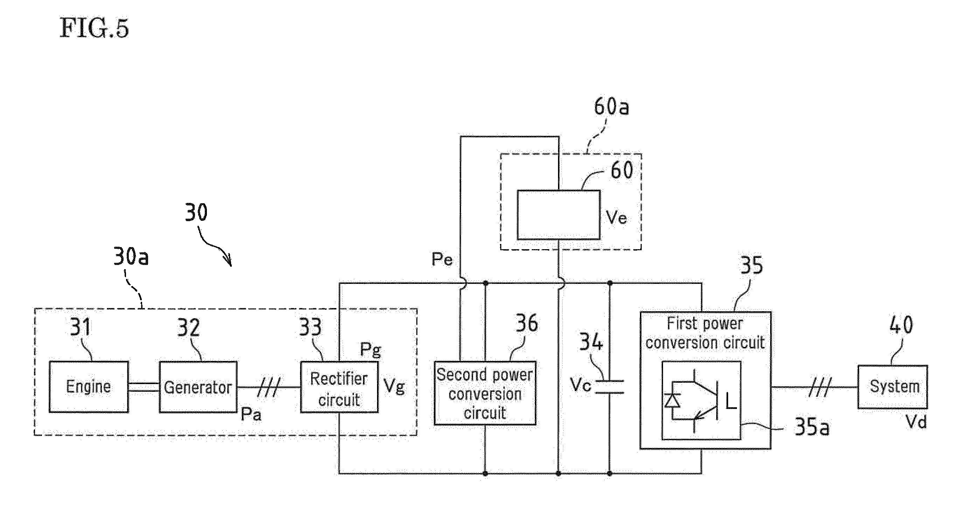

FIG. 5 is a system configuration diagram schematically illustrating a conventional power generation system 30 to implement a system interconnection in which an engine generator system 30a, an external power supply system 60a, and a capacitor 34 are connected in parallel to each other.

In the conventional power generation system 30 shown in FIG. 5, the engine generator system 30a converts, at a rectifier circuit 33, alternating current power Pa from a generator 32 driven by an engine 31 into direct current electric power Pg, and supplies the direct current electric power Pg to the capacitor 34, which is connected in parallel to the direct-current side of the rectifier circuit 33.

Then, a first power conversion circuit 35, which is connected in parallel to the rectifier circuit 33 and the capacitor 34, exchanges electric power with a power system 40 and the capacitor 34. The first power conversion circuit 35 includes a system interconnection inverter 35a.

A second power conversion circuit 36, which is connected in parallel to the rectifier circuit 33, to the capacitor 34, and to the first power conversion circuit 35, exchanges electric power with the capacitor 34 and an external power supply 60 such as a solar cell in an external power supply system 60a.

When the conventional power generation system 30 has a system interconnection with a power system 40 having a system voltage Vd of, for example, 200V, a direct current voltage Vc required of the capacitor 34 is approximately 350V, though this can vary depending on the system voltage Vd of the power system 40.

In contrast, the external power supply 60 has a direct current voltage Ve of oftentimes approximately 200V to 250V at rated voltage. The direct current voltage Ve from the external power supply 60 is likely to change. Specifically, when the external power supply 60 is a solar cell, the direct current voltage Ve from the external power supply 60 changes depending on temperature and illuminance.

In view of this, the external power supply system 60a executes direct-current voltage control to control the direct current voltage Vc of the capacitor 34 at a constant voltage (specifically, approximately 350V). For example, one of the first power conversion circuit 35 and the second power conversion circuit 36 is subjected to direct-current voltage control to control the direct current voltage Vc of the capacitor 34 at a constant voltage (specifically, approximately 350V).

The direct current voltage Vc of the capacitor 34 controlled at a constant voltage is usually converted by the system interconnection inverter 35a into a sinusoidal wave voltage synchronized with the system voltage Vd (specifically, 200V).

Meanwhile, in the engine generator system 30a, when a direct current voltage Vg converted by the rectifier circuit 33 is different from the direct current voltage Vc of the capacitor 34, and if the difference remains unchanged, it is likely that direct current electric power Pg from the engine generator system 30a is supplied to the external power supply system 60a or that direct current electric power Pe from the external power supply system 60a is supplied to the side of the engine generator system 30a. This can degrade the power supply efficiency.

That is, efficient operation of the power generation system 30 requires that the direct current voltage Vg from the engine generator system 30a be the same as the direct current voltage Vc of the capacitor 34. However, since the direct current voltage Vc of the capacitor 34 is continually controlled at a constant voltage by the direct-current voltage control, the direct current voltage Vg from the engine generator system 30a cannot be the same as the direct current voltage Vc of the capacitor 34. This can degrade the power supply efficiency.

In view of this, in the conventional power generation system 30, a change is made to the configuration of the engine generator system 30a to equalize (to match) the direct current voltage Vg from the engine generator system 30a with the direct current voltage Vc of the capacitor 34 controlled at a constant voltage, in other words, to effect a maximum efficiency of the direct current voltage Vg from the engine generator system 30a in the neighborhood of the direct current voltage Vc of the capacitor 34 (specifically, 350V).

For example, to equalize the direct current voltage Vg from the engine generator system 30a with the direct current voltage Vc of the capacitor 34, an existing engine generator system is subjected to a change in the output (revolution) of the engine or the output voltage of the generator; provided with an additional step-up voltage converter or step-down voltage converter between the generator and the first power conversion circuit; or provided with, as a rectifier circuit, an additional active rectifier circuit capable of changing the direct current voltage on the output side (see paragraph [0065] of patent document 1).

These measures ensure efficient implementation of a system interconnection using both of the direct current electric power Pg from the engine generator system 30a and the direct current electric power Pe from the external power supply system 60a.

Prior Art Documents

Patent Documents

Patent document 1: Japanese Unexamined Patent Application Publication No. 2001-258160.

Summary of the Invention

Problems to be Solved by the Invention

Unfortunately, in the conventional power generation system 30 as shown in FIG. 5, an efficient system interconnection with parallel connection among the engine generator system 30a, the external power supply system 60a, and the capacitor 34 requires the above-described measures to an existing engine generator system, namely, changing the output of the engine 31 or the output voltage of the generator 32, providing an additional converter between the generator 32 and the first power conversion circuit 35, and providing an additional active rectifier circuit as the rectifier circuit 33. This involves significantly laborious work.

In view of this, it is an object of the present invention to provide a power generation system that implements an efficient, labor-saving system interconnection in which an engine generator system, an external power supply system, and a capacitor are connected in parallel to each other, without the conventional practice to change the configuration of the existing engine generator system or provide an additional circuit.

Means of Solving the Problems

According to knowledge of the inventor, in a power generation system that implements a system interconnection in which an engine generator system, an external power supply system, and a capacitor are connected in parallel to each other, it is necessary to prevent degradation of the power supply efficiency by equalizing the direct current electric power from the engine generator system with the direct current voltage of the capacitor, when electric power from a generator is supplied to the capacitor while the electric power supplied by the external power supply (the maximum electric power receivable from the external power supply) is lower than demand power (output power instruction of the power generation system) that the power generation system is supposed to supply.

However, in this case, the supply of electric power from the generator to the capacitor ensures stable supply of direct current voltage from the engine generator system to the capacitor. This eliminates the need for the direct-current voltage control, which is control of the direct current voltage of the capacitor.

That is, when electric power from the generator is supplied to the capacitor while the electric power supplied by the external power supply is lower than the demand power that the power generation system is supposed to supply, the direct-current voltage control for the capacitor can be discontinued. When the direct-current voltage control is discontinued, the direct current voltage from the engine generator system consequently becomes equal to the direct current voltage of the capacitor. This eliminates the occurrence of supply of direct current electric power from the engine generator system to the side of the external power supply system, and eliminates the occurrence of supply of direct current electric power from the external power supply system to the side of the engine generator system. Accordingly, no degradation occurs to the power supply efficiency.

In order to solve the problem in view of the above-described knowledge, according to one aspect of the present invention, there is provided a power generation system configured to execute direct-current voltage control by which a direct current voltage of a capacitor is controlled. The power generation system includes an engine, a generator, a rectifier circuit, a capacitor, a first power conversion circuit, a second power conversion circuit, and discontinuing means. The generator is driven by the engine. The rectifier circuit is configured to convert alternating current electric power from the generator into direct current electric power. The capacitor is connected in parallel to a direct-current side of the rectifier circuit. The first power conversion circuit is connected in parallel to the rectifier circuit and to the capacitor so as to exchange electric power with the electric power system and with the capacitor. The second power conversion circuit is connected in parallel to the rectifier circuit, to the capacitor, and to the first power conversion circuit so as to exchange electric power with an external power supply and with the capacitor. The discontinuing means is for discontinuing the direct-current voltage control when electric power from the generator is supplied to the capacitor while electric power supplied by the external power supply is lower than demand power that the power generation system is supposed to supply.

The external power supply may be, for example, a direct current electric power supply that controls the direct current voltage of the capacitor at a constant voltage. Specific examples include, but not limited to: direct current electric power supplies, such as solar cells, fuel cells, and storage batteries; and direct current electric power supplies to convert alternating current power from a turbine into direct current electric power through a rectifier circuit or a converter, the turbine being for converting kinetic energy or pressure of fluids such as wind into electric energy. The external power supply is intended as a concept that encompasses an external power supply in which the foregoing plurality of external power supplies are connected in parallel to each other.

In the power generation system according to the one aspect of the prevent invention, the engine, the generator, and the rectifier circuit constitute the engine generator system. The engine generator system is capable of supplying direct current electric power obtained through the rectifier circuit by conversion of alternating current power from the generator driven by the engine. The external power supply constitutes the external power supply system. The external power supply system is capable of supplying direct current electric power from the external power supply. Both of the direct current electric power from the engine generator system and the direct current electric power from the external power supply system are used to implement a system interconnection.

Incidentally, efficient operation of a conventional power generation system requires that the direct current voltage from the engine generator system be the same as the direct current voltage of the capacitor, when electric power from the generator is supplied to the capacitor while electric power supplied by the external power supply is lower than demand power that the power generation system is supposed to supply. However, the direct current voltage of the capacitor is continually controlled at a constant voltage by the direct-current voltage control. This prevents the equalization of the direct current voltage from the engine generator system with the direct current voltage of the capacitor, unless a change is made to the configuration of the power generation system or an additional circuit is provided.

In view of this, in the power generation system according to the one aspect of the present invention, the direct-current voltage control is discontinued when electric power from the generator is supplied to the capacitor while the electric power supplied by the external power supply is lower than the demand power that the power generation system is supposed to supply. This ensures that the direct current voltage from the engine generator system consequently becomes equal to the direct current voltage of the capacitor.

Thus, the power generation system according to the one aspect of the present invention uses only a simple configuration of discontinuing the direct-current voltage control in ensuring that the direct current voltage from the engine generator system consequently becomes equal to the direct current voltage of the capacitor. This ensures an efficient, labor-saving system interconnection without the conventional practice to change the configuration of the engine generator system or provide an additional circuit.

In the power generation system according to the one aspect of the present invention, when the electric power supplied by the external power supply is lower than the demand power that the power generation system is supposed to supply, the electric power from the generator may be supplied to the capacitor, and the direct-current voltage control may be discontinued by the discontinuing means. This ensures that when the electric power supplied by the external power supply is lower than the demand power that the power generation system is supposed to supply, the electric power from the rectifier circuit is continually supplied to the capacitor, thereby stabilizing the voltage of the capacitor.

In the power generation system according to the one aspect of the present invention, an exemplary embodiment is that the power generation system may further include first voltage detecting means for detecting a value of a voltage from the external power supply, and first current detecting means for detecting a value of a current from the external power supply. This ensures that the value of the voltage and the value of the current from the external power supply are obtained in the power generation system.

In this case, the power generation system may preferably include first transmitting means for transmitting at least one of the value of the voltage and the value of the current from the external power supply to outside the power generation system. This ensures that at least one of the value of the voltage and the value of the current from the external power supply is also obtainable from outside the power generation system.

In the power generation system according to the one aspect of the present invention, an exemplary embodiment is that the power generation system may further include first calculating means for calculating a value of the electric power and a value of electric energy from the external power supply based on the value of the voltage and the value of the current respectively detected by the first voltage detecting means and the first current detecting means. This ensures that the value of the electric power and the value of the electric energy from the external power supply are obtained in the power generation system.

In this case, the power generation system may preferably include second transmitting means for transmitting at least one of the value of the electric power and the value of the electric energy from the external power supply to outside the power generation system. This ensures that at least one of the value of the electric power and the value of the electric energy from the external power supply is also obtainable from the power generation system.

In the power generation system according to the one aspect of the present invention, an exemplary embodiment is that the power generating system may further include second voltage detecting means for detecting a voltage value of the capacitor, and second current detecting means for detecting an output current value of the second power conversion circuit. This ensures that the voltage value of the capacitor and the output current value of the second power conversion circuit are obtained.

In this case, the power generation system may preferably include third transmitting means for transmitting at least one of the voltage value of the capacitor and the output current value of the second power conversion circuit to outside the power generation system. This ensures that at least one of the voltage value of the capacitor and the output current value of the second power conversion circuit is also obtainable from outside the power generation system.

In the power generation system according to the one aspect of the present invention, an exemplary embodiment is that the power generating system may further include second calculating means for calculating a value of electric power and a value of electric energy from the second power conversion circuit based on the voltage value and the output current value respectively detected by the second voltage detecting means and the second current detecting means. This ensures that the value of the electric power and the value of the electric energy from the second power conversion circuit are obtained in the power generation system. As a result, the value of the electric power and the value of the electric energy obtained from the external power supply are accurate with consideration given to the power conversion efficiency of the second power conversion circuit.

In this case, the power generation system may preferably include fourth transmitting means for transmitting at least one of the value of the electric power and the value of the electric energy from the second power conversion circuit to outside the power generation system. This ensures that at least one of the value of the electric power and the value of the electric energy from the second power conversion circuit also obtainable from outside the power generation system.

In the power generation system according to the one aspect of the present invention, an exemplary embodiment is that the power generating system may further include the second voltage detecting means and third current detecting means for detecting an output current value of the rectifier circuit. This ensures that the voltage value of the capacitor and the output current value of the rectifier circuit are obtained in the power generation system.

In this case, the power generation system may preferably include fifth transmitting means for transmitting at least one of the voltage value of the capacitor and the output current value of the rectifier circuit to outside the power generation system. This ensures that at least one of the voltage value of the capacitor and the output current value of the rectifier circuit also obtainable from outside the power generation system.

In the power generation system according to the one aspect of the present invention, an exemplary embodiment is that the power generating system may further include third calculating means for calculating a value of electric power and a value of electric energy from the rectifier circuit based on the voltage value and the output current value respectively detected by the second voltage detecting means and the third current detecting means. This ensures that the value of the electric power and the value of the electric energy from the rectifier circuit (that is, the value of the electric power and the value of the electric energy from the engine generator system) are obtained in the power generation system.

In this case, the power generation system may preferably include sixth transmitting means for transmitting at least one of the value of the electric power and the value of the electric energy from the rectifier circuit to outside the power generation system. This ensures that at least one of the value of the electric power and the value of the electric energy from the rectifier circuit is also obtainable from outside the power generation system.

In the power generation system according to the one aspect of the present invention, an exemplary embodiment is that the power generating system may further include fourth calculating means for calculating a power conversion efficiency value of the first power conversion circuit based on an input electric power value and an output electric power value of the first power conversion circuit.

In the power generation system according to the one aspect of the present invention, at least two transmitting means among the first transmitting means to the sixth transmitting means may be configured into one transmitting means. This ensures that the transmitting means thus configured transmits at least one of the values obtained by any of the means to outside the power generation system.

Effects of the Invention

Thus, the power generation system according to the one aspect of the present invention includes discontinuing means for discontinuing the direct-current voltage control when electric power from the generator is supplied to the capacitor while the electric power supplied by the external power supply is lower than the demand power that the power generation system is supposed to supply. This ensures an efficient, labor-saving system interconnection without the conventional practice to change the configuration of the engine generator system or provide an additional circuit.

Brief Description of the Drawings

[FIG. 1] FIG. 1 is a system configuration diagram schematically illustrating a power generation system according to a first embodiment of the present invention.

[FIG. 2] FIG. 2 is a system configuration diagram schematically illustrating a power generation system according to a second embodiment of the present invention.

[FIG. 3] FIG. 3 is a system configuration diagram schematically illustrating a power generation system according to a third embodiment of the present invention.

[FIG. 4] FIG. 4 is a system configuration diagram schematically illustrating a power generation system according to a fourth embodiment of the present invention.

[FIG. 5] FIG. 5 is a system configuration diagram schematically illustrating a conventional power generation system.

Modes for Carrying out the Invention

Embodiments of the present invention will be described below by referring to the accompanying drawings. It is noted that the embodiments are provided merely for exemplary purposes and are not intended to limit the present invention.

(First Embodiment)

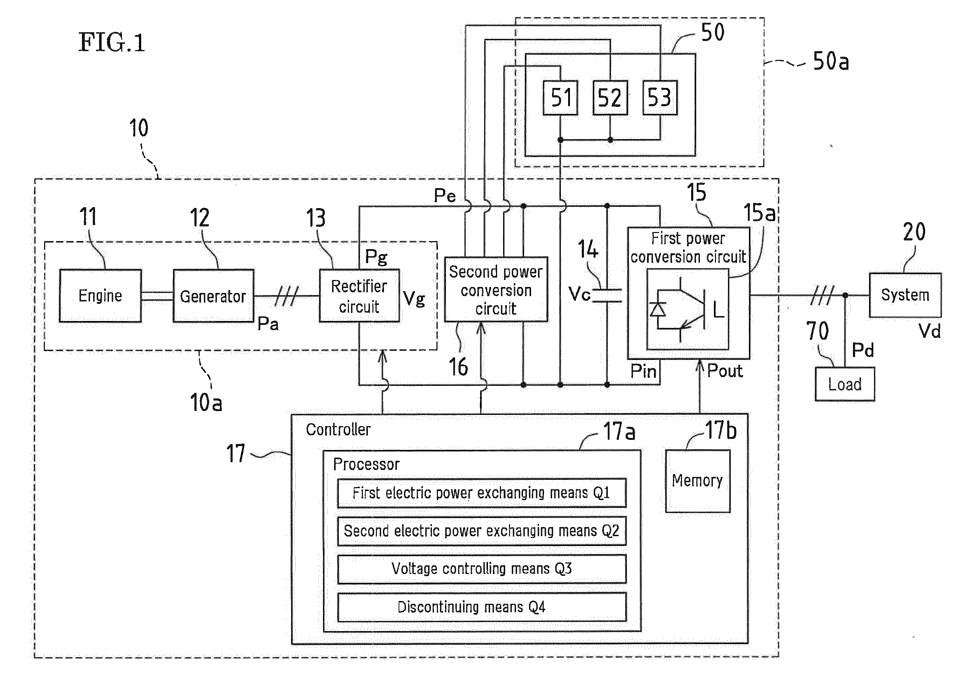

FIG.1 is a system configuration diagram schematically illustrating a power generation system 10 according to a first embodiment of the present invention.
The power generation system 10 in FIG. 1 is a cogeneration system in which an engine generator system 10a is connected in parallel to an external power supply system 50a and which implements a system interconnection with a commercial electric power system 20. The commercial electric power system 20 has a system voltage Vd of 200 V in this example.
The power generation system 10 is a power generation system including an engine 11, a generator 12, a rectifier circuit 13, a capacitor 14, a first power conversion circuit 15, a second power conversion circuit 16, and a controller 17, all of which are contained within one package.
The engine 11 in this example is a gas engine, which drivingly rotates on gas as fuel. The generator 12 is driven by the engine 11 to output alternating current power Pa. The rectifier circuit 13 converts the alternating current power Pa from the generator 12 into direct current electric power Pg.
The capacitor 14 is connected in parallel to the direct-current side of the rectifier circuit 13 and is subjected to direct-current voltage control by which a direct current voltage Vc of the capacitor 14 is controlled at a constant voltage (350V in this example).
The first power conversion circuit 15 is a power conversion circuit to exchange electric power with the commercial electric power system 20 and with the capacitor 14, and is connected in parallel to the rectifier circuit 13 and the capacitor 14. The first power conversion circuit 15 includes a system interconnection inverter 15a. The system interconnection inverter 15a converts direct current electric power Pin on the input side into alternating current output power Pout. The alternating current output power Pout has a frequency synchronized with the frequency of the commercial electric power system 20. An electric power load 70 is connected in parallel between the first power conversion circuit 15 and the commercial electric power system 20.
The second power conversion circuit 16 is a power conversion circuit to exchange electric power with an external power supply 50 and with the capacitor 14, and is connected in parallel to the rectifier circuit 13, the capacitor 14, and the first power conversion circuit 15.
In the external power supply 50 in this example, a solar cell 51, a wind generator 52 including a wind turbine, not shown, and a storage battery 53 are connected in parallel to each other.
The engine generator system 10a includes the engine 11, the generator 12, and the rectifier circuit 13 so as to supply the direct current electric power Pg obtained through the rectifier circuit 13 by conversion of the alternating current power Pa from the generator 12 driven by the engine 11. The external power supply system 50a includes the external power supply 50 so as to supply direct current electric power Pe from the external power supply 50.

Examples of the second power conversion circuit 16, whose circuit configuration is not shown, include a second power conversion circuit that includes three or more pairs (legs) of semiconductor switching elements, each pair including two reverse conducting semiconductor switching elements connected in series to one another with their respective conducting directions oriented in the same direction. The semiconductor switching element pairs are connected in parallel to the capacitor 14, and to the mid-point of each semiconductor switching element pair, one end of an inductor is connected. The external power supply (for example, the solar cell 51, the wind generator 52, and the storage battery 53) can be connected between the other end of each inductor and the connection end of the capacitor 14.

The second power conversion circuit thus configured ensures a converter that accords with the external power supply to be connected. For example, when the solar cell 51 is the external power supply, the reverse conducting semiconductor switching elements connected to the solar cell 51 function as a solar cell-dedicated DC/DC converter. When the wind generator 52 is the external power supply, the reverse conducting semiconductor switching elements connected to the wind generator 52 function as a wind turbine-dedicated AC/DC converter. When the storage battery 53 is the external power supply, the reverse conducting semiconductor switching elements connected to the storage battery 53 function as a storage battery-dedicated bidirectional DC/DC converter.

The controller 17 includes a processor 17a such as CPU (Central Processing Memory), and a memory 17b. The memory 17b includes memory portions such as ROM (Read Only Memory) and RAM (Random Access Memory), so as to store various control programs, necessary functions, necessary tables, and various kinds of data.

The controller 17 controls the engine generator system 10a, the first power conversion circuit 15, and the second power conversion circuit 16.

Specifically, the controller 17 operably controls the first power conversion circuit 15 to function as first electric power exchanging means Q1 for exchanging electric power with the commercial electric power system 20 and with the capacitor 14. The controller 17 also operably controls the second power conversion circuit 16 to function as second electric power exchanging means Q2 for exchanging electric power with the external power supply 50 and with the capacitor 14.

Further, the controller 17 operably controls at least one of the first power conversion circuit 15 and the second power conversion circuit 16 (both of the first power conversion circuit 15 and the second power conversion circuit 16 are controlled in this example) to function as voltage controlling means Q3 for executing direct-current voltage control by which the direct current voltage Vc of the capacitor 14 is controlled at a constant voltage (350 V in this example).

The engine generator system 10a supplies a direct current voltage Vg, which is higher than the direct current voltage Vc of the capacitor 14 controlled at a constant voltage.

When the direct current electric power Pg from the engine generator system 10a is supplied to the capacitor 14 while the direct current electric power Pe supplied by the external power supply 50 (the maximum electric power receivable from the external power supply 50) is lower than demand power Pd that the power generation system 10 is supposed to supply to the electric power load 70 (specifically, an output power instruction of the power generation system 10), then the controller 17 functions as discontinuing means Q4 for discontinuing the voltage controlling means Q3 for at least one of the first power conversion circuit 15 and the second power conversion circuit 16 (both of the first power conversion circuit 15 and the second power conversion circuit 16 in this example). It is noted that when the direct current electric power Pe supplied by the external power supply 50 is lower than the demand power Pd that the power generation system 10 is supposed to supply to the electric power load 70, the controller 17 may control the direct current electric power Pg from the engine generator system 10a to be supplied to the capacitor 14 and at the same time may implement the discontinuing means Q4 to discontinue the voltage controlling means Q3. This ensures that when the direct current electric power Pe supplied by the external power supply 50 is lower than the demand power Pd that the power generation system 10 is supposed to supply to the electric power load 70, the voltage Vg from the engine generator system 10a is continually supplied to the capacitor 14, thereby stabilizing the voltage Vc of the capacitor 14.

It is noted that the electric power supply may be blocked between the generator 12 and the capacitor 14.

In this respect, examples of the case where the direct current electric power Pg from the engine generator system 10a is supplied to the capacitor 14 include the case where the engine 11 is operated in a configuration where the electric power supply cannot be blocked between the generator 12 and the capacitor 14, and the case where the engine 11 is operated in a configuration where the electric power supply can be blocked between the generator 12 and the capacitor 14, while the electric power supply between the generator 12 and the capacitor 14 is in a state (that is, in ON state) that the blockage of the electric power supply is released.

In the engine generator system 10a of the power generation system 10 described above, the alternating current power Pa from the generator 12 driven by the engine 11 is converted by the rectifier circuit 13 into the direct current electric power Pg, and the direct current electric power Pg is supplied to the capacitor 14 connected in parallel to the direct-current side of the rectifier circuit 13.

The first power conversion circuit 15, which is connected in parallel to the rectifier circuit 13 and the capacitor 14, exchanges electric power with the commercial electric power system 20 and with the capacitor 14.

The second power conversion circuit 16, which is connected in parallel to the rectifier circuit 13, the capacitor 14, and the first power conversion circuit 15, exchanges electric power with the external power supply 50 in the external power supply system 50a and with the capacitor 14.

In the power generation system 10, it is necessary to prevent degradation of the power supply efficiency by equalizing the direct current voltage Vg from the engine generator system 10a with the direct current voltage Vc of the capacitor 14, when the direct current electric power Pg from the engine generator system 10a is supplied to the capacitor 14 while the direct current electric power Pe supplied by the external power supply 50 is lower than the demand power Pd that the power generation system 10 is supposed to supply to the electric power load 70.

In this respect, in a conventional power generation system, the direct current voltage Vc of the capacitor 14 is continually controlled at a constant voltage by the direct-current voltage control. This prevents the equalization of the direct current voltage Vg from the engine generator system 10a with the direct current voltage Vc of the capacitor 14, unless a change is made to the configuration of the engine generator system 10a or an additional circuit is provided for the purpose of equalizing the direct current voltage Vg from the engine generator system 10a with the direct current voltage Vc of the capacitor 14 controlled at a constant voltage.

In contrast, with the power generation system 10 according to the first embodiment of the present invention, when the direct current electric power Pg from the engine generator system 10a is supplied to the capacitor 14 while the direct current electric power Pe supplied by the external power supply 50 is lower than the demand power Pd that the power generation system 10 is supposed to supply to the electric power load 70, the discontinuing means Q4 is implemented to discontinue the voltage controlling means Q3. This ensures that the direct current voltage Vg from the engine generator system 10a consequently becomes equal to the direct current voltage Vc of the capacitor 14. This eliminates the occurrence of supply of the direct current electric power Pg from the engine generator system 10a to the side of the external power supply system 50a, and eliminates the occurrence of supply of the direct current electric power Pe from the external power supply system 50a to the side of the engine generator system 10a. Accordingly, no degradation occurs to the power supply efficiency.

This ensures efficient implementation of a system interconnection using both of the direct current electric power Pg from the engine generator system 10a and the direct current electric power Pe from the external power supply system 50a.

Thus, the power generation system 10 uses only a simple configuration of implementing the discontinuing means Q4 to discontinue the voltage controlling means Q3 (that is, only changing the control configuration of the controller 17) in ensuring that the direct current voltage Vg from the engine generator system 10a consequently becomes equal to the direct current voltage Vc of the capacitor 14. This ensures an efficient, labor-saving system interconnection without the conventional practice to change the configuration of the engine generator system or provide an additional circuit.

It is noted that the power generation system 10 executes the direct-current voltage control when no electric power is supplied from the generator 12 to the capacitor 14. In contrast, when the electric power from the generator 12 is supplied to the capacitor 14 while the electric power supplied by the external power supply 50 is equal to or higher than the demand power that the power generation system 10 is supposed to supply, the power generation system 10 stops the electric power from the generator 12 (for example, stops the engine 11).

(Second Embodiment)

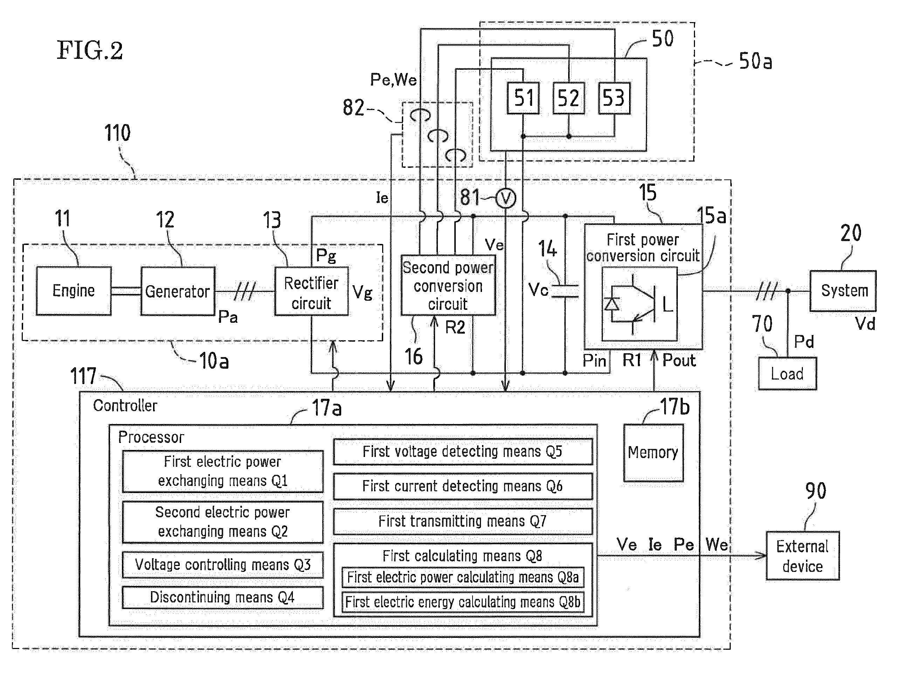

FIG. 2 is a system configuration diagram schematically illustrating a power generation system 110 according to a second embodiment of the present invention.

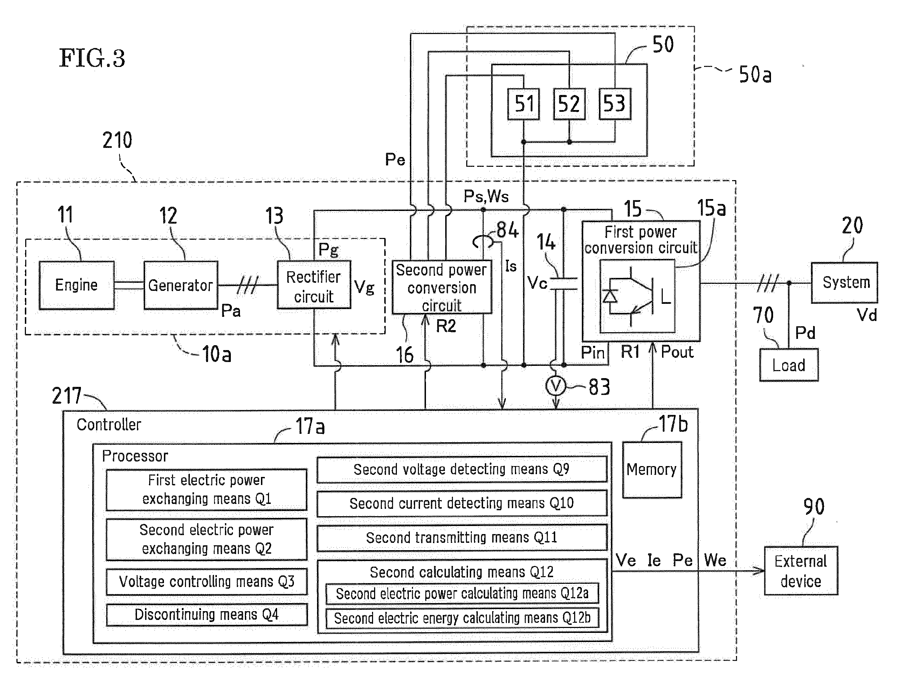

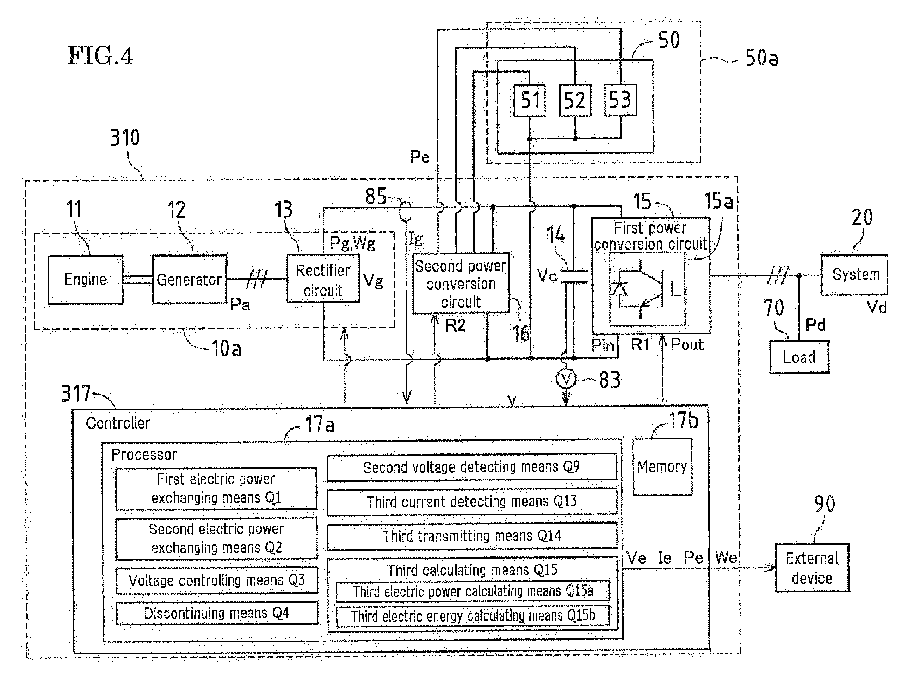

Like reference numerals designate corresponding or identical elements of the power generation system 10 throughout FIGs. 1 and 2, and therefore such elements will not be further elaborated here. The same applies to a third embodiment of FIG. 3 and a fourth embodiment of FIG. 4, described later.

The power generation system 110 according to the second embodiment is a power generation system including, as additions to the power generation system 10 according to the first embodiment, a first voltmeter 81 to detect an output voltage of the external power supply 50, and a first ammeter 82 to detect an output current of the external power supply 50. Additionally, a controller 117 replaces the controller 17. The controller 117 includes timer means (not shown) for measuring an electric power supply time that is used to calculate electric energy. The same applies to a controller 217 according to the third embodiment and a controller 317 according to the fourth embodiment, described later.

The controller 117 functions as first voltage detecting means Q5 for detecting a value Ve of the voltage from the external power supply 50 based on a detection result of the first voltmeter 81, and first current detecting means Q6 for detecting a value Ie of the current from the external power supply 50 based on a detection result of the first ammeter 82, in addition to the first electric power exchanging means Q1, the second electric power exchanging means Q2, the voltage controlling means Q3, and the discontinuing means Q4, described above.

This ensures that the power generation system 110 obtains the value Ve of the voltage and the value Ie of the current from the external power supply 50.

The controller 117 also functions as first transmitting means Q7 for transmitting at least one of the value Ve of the voltage and the value Ie of the current from the external power supply 50 to an external device 90, such as a computer, connected to the power generation system 110.

This ensures that at least one of the value Ve of the voltage and the value Ie of the current from the external device 90 is also obtainable from outside the power generation system 110. Additionally, transmitting both of the value Ve of the voltage and the value Ie of the current from the external power supply 50 to the external device 90 connected to the power generation system 110 ensures calculation of a value Pe of the electric power and a value We of the electric energy from the external power supply 50 at the outside of the power generation system 110 based on the value Ve of the voltage and the value Ie of the current from the external power supply 50. This ensures that the value Pe of the electric power and the value We of the electric energy from the external power supply system 50a are obtained outside the power generation system 110.

In the second embodiment, the controller 117 also functions as first electric power calculating means Q8a for calculating the value Pe of the electric power from the external power supply 50. The electric power value Pe is represented by the product of the value Ve of the voltage detected by the first voltage detecting means Q5 and the current value Ie detected by the first current detecting means Q6. The controller 117 also functions as first electric energy calculating means Q8b for calculating the value We of the electric energy from the external power supply 50. The electric energy value We is represented by the sum of products of the electric power values Pe calculated by the first electric power calculating means Q8a and the electric power supply times. It is noted that the first electric power calculating means Q8a and the first electric energy calculating means Q8b constitute first calculating means Q8.

This ensures that the power generation system 110 obtains the value Pe of the electric power and the value We of the electric energy from the external power supply 50.

The first transmitting means Q7 may transmit at least one of the voltage value Ve, the current value Ie, the electric power value Pe, and the electric energy value We to the external device 90 connected to the power generation system 110.

This ensures that at least one of the voltage value Ve, the current value Ie, the electric power value Pe, and the electric energy value We is also obtainable from outside the power generation system 110.

(Third Embodiment)

FIG. 3 is a system configuration diagram schematically illustrating a power generation system 210 according to a third embodiment of the present invention.

The power generation system 210 according to the third embodiment is a power generation system including, as additions to the power generation system 10 according to the first embodiment, a second voltmeter 83 to detect a voltage of the capacitor 14 and a second ammeter 84 to detect an output current of the second power conversion circuit 16. Additionally, a controller 217 replaces the controller 17.

The controller 217 functions as second voltage detecting means Q9 for detecting the voltage value Vc of the capacitor 14 based on a detection result of the second voltmeter 83, and second current detecting means Q10 for detecting an output current value Is of the second power conversion circuit 16 based on a detection result of the second ammeter 84, in addition to the first electric power exchanging means Q1, the second electric power exchanging means Q2, the voltage controlling means Q3, and the discontinuing means Q4, described above.

This ensures that the power generation system 210 obtains the voltage value Vc of the capacitor 14 and the output current value Is of the second power conversion circuit 16.

The controller 217 also functions as second transmitting means Q11 for transmitting at least one of the voltage value Vc of the capacitor 14 and the output current value Is of the second power conversion circuit 16 to the external device 90 connected to the power generation system 210.

This ensures that at least one of the voltage value Vc of the capacitor 14 and the output current value Is of the second power conversion circuit 16 is also obtainable from outside the power generation system 210. Additionally, transmitting both of the voltage value Vc of the capacitor 14 and the output current value Is of the second power conversion circuit 16 to the external device 90 connected to the power generation system 210 ensures calculation of a value Ps of the electric power and a value Ws of the electric energy from the second power conversion circuit 16 at the outside of the power generation system 210 based on the voltage value Vc of the capacitor 14 and the output current value Is of the second power conversion circuit 16. This ensures that the value Ps of the electric power and the value Ws of the electric energy from the second power conversion circuit 16 are obtained outside the power generation system 210. As a result, the electric power value Ps and the electric energy value Ws obtained from the external power supply system 50a are accurate with consideration given to the power conversion efficiency of the second power conversion circuit 16.

In the third embodiment, the controller 217 also functions as second electric power calculating means Q12a for calculating the value Ps of the electric power from the second power conversion circuit 16. The electric power value Ps is represented by the product of the voltage value Vc detected by the second voltage detecting means Q9 and the output current value Is detected by the second current detecting means Q10. The controller 217 also functions as second electric energy calculating means Q12b for calculating the value Ws of the electric energy from the second power conversion circuit 16. The electric energy value Ws is represented by the sum of products of the electric power values Ps calculated by the second electric power calculating means Q12a and the electric power supply times. It is noted that the second electric power calculating means Q12a and the second electric energy calculating means Q12b constitute second calculating means Q12.

This ensures that the power generation system 210 obtains the value Ps of the electric power and the value Ws of the electric energy from the second power conversion circuit 16.

The second transmitting means Q11 may transmit at least one of the voltage value Vc, the output current value Is, the electric power value Ps, and the electric energy value Ws to the external device 90 connected to the power generation system 210.

This ensures that at least one of the voltage value Vc, the output current value Is, the electric power value Ps, and the electric energy value Ws is also obtainable from outside the power generation system 210.

(Fourth Embodiment)

FIG. 4 is a system configuration diagram schematically illustrating a power generation system 310 according to a fourth embodiment of the present invention.

The power generation system 310 according to the fourth embodiment of the present invention is a power generation system including, as additions to the power generation system 10 according to the first embodiment, the second voltmeter 83 to detect the voltage of the capacitor 14, and a third ammeter 85 to detect an output current of the rectifier circuit 13. Additionally, a controller 317 replaces the controller 17.

The controller 317 functions as the second voltage detecting means Q9 for detecting the voltage value Vc of the capacitor 14 based on a detection result of the second voltmeter 83, and third current detecting means Q13 for detecting an output current value Ig of the rectifier circuit 13 based on a detection result of the third ammeter 85, in addition to the first electric power exchanging means Q1, the second electric power exchanging means Q2, the voltage controlling means Q3, and the discontinuing means Q4, described above.

This ensures that the power generation system 310 obtains the voltage value Vc of the capacitor 14 and the output current value Ig of the rectifier circuit 13.

The controller 317 also functions as third transmitting means Q14 for transmitting at least one of the voltage value Vc of the capacitor 14 and the output current value Ig of the rectifier circuit 13 to the external device 90 connected to the power generation system 310.

This ensures that at least one of the voltage value Vc of the capacitor 14 and the output current value Ig of the rectifier circuit 13 is also obtainable from outside the power generation system 310. Additionally, transmitting both of the voltage value Vc of the capacitor 14 and the output current value Ig of the rectifier circuit 13 to the external device 90 connected to the power generation system 310 ensures calculation of a value Pg of the electric power and a value Wg of the electric energy from the rectifier circuit 13 at the outside of the power generation system 310 based on the voltage value Vc of the capacitor 14 and the output current value Ig of the rectifier circuit 13. This ensures that the value Pg of the electric power and the value Wg of the electric energy from the rectifier circuit 13 (that is, the value Pg of the electric power and the value Wg of the electric energy from the engine generator system 10a) are obtained outside the power generation system 310.

In the fourth embodiment, the controller 317 also functions as third electric power calculating means Q15a for calculating the value Pg of the electric power from the rectifier circuit 13. The electric power value Pg is represented by the product of the voltage value Vc detected by the second voltage detecting means Q9 and the output current value Ig detected by the third current detecting means Q13. The controller 317 also functions as third electric energy calculating means Q15b for calculating the value Wg of the electric energy from the rectifier circuit 13. The electric energy value Wg is represented by the sum of products of the electric power values Pg calculated by the third electric power calculating means Q15a and the electric power supply times. It is noted that the third electric power calculating means Q15a and the third electric energy calculating means Q15b constitute third calculating means Q15.

This ensures that the power generation system 310 obtains the value Pg of the electric power and the value Wg of the electric energy from the rectifier circuit 13 (that is, the value Pg of the electric power and the value Wg of the electric energy from the engine generator system 10a).

The third transmitting means Q14 may transmit at least one of the voltage value Vc, the output current value Ig, the electric power value Pg, and the electric energy value Wg to the external device 90 connected to the power generation system 310.

This ensures that at least one of the voltage value Vc, the output current value Ig, the electric power value Pg, and the electric energy value Wg is also obtainable from outside the power generation system 310.

(Other Embodiments)

In the power generation systems 110, 210, and 310 according to the second to fourth embodiments, the control devices 117, 217, and 317 may also function as fourth calculating means for calculating a first power conversion efficiency value R1 of the first power conversion circuit 15 based on an input electric power value Pin and an output electric power value Pout of the first power conversion circuit 15.

The input electric power value Pin may be detected based on a detection result detected by a voltmeter (not shown) to detect a direct-current input voltage and on a detection result detected by an ammeter (not shown) to detect a direct-current input current. Alternatively, the input electric power value Pin may be detected at the first power conversion circuit 15.

The output electric power value Pout may be detected based on a detection result detected by a voltmeter (not shown) to detect an alternating-current output voltage and on a detection result detected by an ammeter (not shown) to detect an alternating-current output current. Alternatively, the output electric power value Pout may be detected at the first power conversion circuit 15.

In this case, the first to third transmitting means Q7, Q11, and Q14 may further transmit the first power conversion efficiency value R1 to outside the power generation systems 110, 210, and 310.

Also, the control devices 117, 217, and 317 may further function as fifth calculating means for calculating a second power conversion efficiency value R2 of the second power conversion circuit 16 based on the value Pe of the direct current electric power (input electric power of the second power conversion circuit 16) from the external power supply 50 and the value Ps of the electric power (output electric power) from the second power conversion circuit 16.

The value Pe of the direct current electric power from the external power supply 50 may be detected by the first calculating means Q8, or detected at the second power conversion circuit 16.

The value Ps of the electric power from the second power conversion circuit 16 may be detected by the second calculating means Q12, or detected at the second power conversion circuit 16.

In this case, the first to third transmitting means Q7, Q11, and Q14 may further transmit the second power conversion efficiency value R2 to outside the power generation systems 110, 210, and 310.

When at least two of the power generation systems 110, 210, and 310 according to the second to fourth embodiments are combined, the transmitting means of the embodiments may be configured into one transmitting means.

In this respect, the following relations represented by formulas 1 to 3 are established with respect to the input electric power value Pin of the first power conversion circuit 15, the output electric power value Pout of the first power conversion circuit 15, the value Pg of the direct current electric power from the engine generator system 10a, the value Ps of the electric power from the external power supply system 50a, the value Pe of the electric power from the external power supply 50, the first power conversion efficiency value R1 of the first power conversion circuit 15, and the second power conversion efficiency value R2 of the second power conversion circuit 16.

$$Pin = Pg + Ps \ ... \ (Formula \ 1)$$

$$R1 = Pout/Pin \ ... \ (Formula \ 2)$$

$$R2 = Ps/Pe \ ... \ (Formula \ 3)$$

[For the Second Embodiment]

For the power generation system 110 according to the second embodiment shown in FIG. 2, each of the values may be calculated in the following manner, for example.

Assume that the detected value Pe of the electric power from the external power supply 50 is 10 kW, the detected second power conversion efficiency value R2 of the second power conversion circuit 16 is 0.9, the detected output electric power value Pout of the first power conversion circuit 15 is 17.1 kW, and the detected first power conversion efficiency value R1 of the first power conversion circuit 15 is 0.9.

(1) According to formula 3, the value Ps of the electric power from the external power supply system 50a is as follows:

$$Ps = Pe \cdot R2 = 10 \text{ kW} \cdot 0.9 = 9 \text{ kW.}$$

(2) According to formula 2, the input electric power value Pin of the first power conversion circuit 15 is as follows:

$$Pin = Pout/R1 = 17.1 \text{ kW}/0.9 = 19 \text{ kW.}$$

(3) According to formula 1, the value Pg of the electric power from the engine generator system 10a is as follows:

$$Pg = Pin-Ps = 19 \text{ kW}-9 \text{ kW} = 10 \text{ kW.}$$

(4) The value Ps of the electric power from the external power supply system 50a with consideration given to R1 is as follows:

$$Ps \text{ (in consideration of R1)} = Ps \cdot R1 = 9 \text{ kW} \cdot 0.9 = 8.1 \text{ kW.}$$

(5) The value Pg of the electric power from the engine generator system 10a with consideration given to R1 is as follows:

$$Pg \text{ (in consideration of R1)} = Pg \cdot R1 = 10 \text{ kW} \cdot 0.9 = 9 \text{ kW.}$$

Thus, this manner of calculation may be used to obtain the electric power value Ps, the input electric power value Pin, the electric power value Pg, the electric power value Ps with consideration given to the first power conversion efficiency value R1, and the electric power value Pg with consideration given to the first power conversion efficiency value R1.

[For the Third Embodiment]

For the power generation system 210 according to the third embodiment shown in FIG. 3, each of the values may be calculated in the following manner, for example.

Assume that the detected value Ps of the electric power from the external power supply system 50a is 9 kW, the detected output electric power value Pout of the first power conversion circuit 15 is 17.1 kW, and the detected first power conversion efficiency value R1 of the first power conversion circuit 15 is 0.9. A similar manner to the above-described (2) to (5) in the second embodiment may be used to obtain the input electric power value Pin, the electric power value Pg, the electric power value Ps with consideration given to the first power conversion efficiency value R1, and the electric power value Pg with consideration given to the first power conversion efficiency value R1.

[For the Fourth Embodiment]

For the power generation system 310 according to the fourth embodiment shown in FIG. 4, each of the values may be calculated in the following manner, for example.

Assume that the detected output electric power value Pout of the first power conversion circuit 15 is 17.1 kW, the detected value Pg of the electric power from the engine generator system 10a is 10 kW, and the detected first power conversion efficiency value R1 of the first power conversion circuit 15 is 0.9.

(1) According to formula 2, the input electric power value Pin of the first power conversion circuit 15 is as follows:

$$Pin = Pout/R1 = 17.1 \text{ kW}/0.9 \text{ kW} = 19 \text{ kW}.$$

(2) According to formula 1, the value Ps of the electric power from the external power supply system 50a is as follows:

$$Ps = Pin - Pg = 19 \text{ kW} - 10 \text{ kW} = 9 \text{ kW}.$$

(3) The value Ps of the electric power from the external power supply system 50a with consideration given to R1 is as follows:

$$Ps \text{ (in consideration of R1)} = Ps \cdot R1 = 9 \text{ kW} \cdot 0.9 = 8.1 \text{ kW}.$$

(4) The value Pg of the electric power from the engine generator system 10a with consideration given to R1 is as follows:

$$Pg \text{ (in consideration of R1)} = Pg \cdot R1 = 10 \text{ kW} \cdot 0.9 = 9 \text{ kW}.$$

Thus, this manner of calculation may be used to obtain the input electric power value Pin, the electric power value Ps, the electric power value Ps with consideration given to the first power conversion efficiency value R1, and the electric power value Pg with consideration given to the first power conversion efficiency value R1.

[For Combination of the Second Embodiment and the Fourth Embodiment]

For example, when the power generation system 110 according to the second embodiment shown in FIG. 2 and the power generation system 310 according to the fourth embodiment shown in FIG. 4 are combined, the following calculation may be used.

Assume that the detected direct current value Pe of the electric power from the external power supply 50 is 10 kW, the detected value Pg of the electric power from the engine generator system 10a is 10 kW, the detected first power conversion efficiency value R1 is 0.9, and the detected second power conversion efficiency value R2 is 0.9.

(1) According to formula 3, the value Ps of the electric power from the external power supply system 50a is as follows:

$$Ps = Pe \cdot R2 = 10 \text{ kW} \cdot 0.9 = 9 \text{ kW}.$$

(2) According to formula 1, the input electric power value Pin of the first power conversion circuit 15 is as follows:

$$Pin = Pg + Rs = 10 \text{ kW} + 9 \text{ kW} = 19 \text{ kW}.$$

(3) The value Ps of the electric power from the external power supply system 50a with consideration given to R1 is as follows:

$$Ps \text{ (in consideration of R1)} = Ps \cdot R1 = 9 \text{ kW} \cdot 0.9 = 8.1 \text{ kW}.$$

(4) The value Pg of the electric power from the engine generator system 10a with consideration given to R1 is as follows:

$$Pg \text{ (in consideration of R1)} = Pg \cdot R1 = 10 \text{ kW} \cdot 0.9 = 9 \text{ kW.}$$

Thus, this manner of calculation may be used to obtain the electric power value Ps, the input electric power value Pin, the electric power value Ps with consideration given to the first power conversion efficiency value R1, and the electric power value Pg with consideration given to the first power conversion efficiency value R1.

[For Combination of the Third Embodiment and the Fourth Embodiment]

For example, the power generation system 210 according to the third embodiment shown in FIG. 3 and the power generation system 310 according to the fourth embodiment shown in FIG. 4 may be combined. Assume that the detected value Ps of the electric power from the external power supply system 50a is 0.9 kW, the detected value Pg of the electric power from the engine generator system 10a is 10 kW, and the detected first power conversion efficiency value R1 is 0.9. A similar manner to the above-described (2) to (4) in the combination of the second embodiment and the fourth embodiment may be used to obtain the input electric power value Pin, the electric power value Ps with consideration given to the first power conversion efficiency value R1, and the electric power value Pg with consideration given to the first power conversion efficiency value R1.

Description of the Reference Numerals

| 10 | Power generation system |
| 10a | Engine generator system |
| 11 | Engine |
| 12 | Generator |
| 13 | Rectifier circuit |
| 14 | Capacitor |
| 15 | First power conversion circuit |
| 15a | System interconnection inverter |
| 16 | Second power conversion circuit |
| 20 | Electric power system |
| 50 | External power supply |
| 50a | External power supply system |
| 70 | Electric power load |
| 90 | External device |
| Ie | Value of current from external power supply |
| Ig | Output current value of rectifier circuit |
| Is | Output current value of second power conversion circuit |
| Pa | Alternating current power pa from generator |

Pd    Demand power that a power generation system is supposed to supply

Pe    Value of electric power from external power supply

Pg    Value of electric power value rectifier circuit (engine generator system)

Pin    Input electric power value of first power conversion circuit

Pout    Output electric power value of first power conversion circuit

Ps    Value of electric power from second power conversion circuit (external power supply system)

Q1    First electric power exchanging means

Q2    Second electric power exchanging means

Q3    Voltage controlling means

Q4    Discontinuing means

Q5    First voltage detecting means

Q6    First current detecting means

Q7    First transmitting means

Q8    First calculating means

Q9    Second voltage detecting means

Q10    Second current detecting means

Q11    Second transmitting means

Q12    Second calculating means

Q13    Third current detecting means

Q14    Third transmitting means

Q15    Third calculating means

R1    First power conversion efficiency value of first power conversion circuit

R2    Second power conversion efficiency value of second power conversion circuit

Vc    Voltage value of capacitor

Ve    Value of voltage from external power supply

We    Value of electric energy from external power supply

Wg    Value of electric energy from rectifier circuit

Ws    Value of electric energy from second power conversion circuit

**Claims**

1. A power generation system configured to execute direct-current voltage control by which a direct current voltage of a capacitor is controlled, the power generation system comprising:

   an engine;
   a generator driven by the engine;
   a rectifier circuit configured to convert alternating current electric power from the generator into direct current electric power;
   a capacitor connected in parallel to a direct-current side of the rectifier circuit;
   a first power conversion circuit connected in parallel to the rectifier circuit and to the capacitor so as to exchange electric power with the electric power system and with the capacitor;
   a second power conversion circuit connected in parallel to the rectifier circuit, to the capacitor, and to the first power conversion circuit so as to exchange electric power with an external power supply and with the capacitor; and
   discontinuing means for discontinuing the direct-current voltage control when electric power from the generator is supplied to the capacitor while electric power supplied by the external power supply is lower than demand power that the power generation system is supposed to supply.

2. The power generation system according to claim 1, wherein when the electric power supplied by the external power supply is lower than the demand power that the power generation system is supposed to supply, the electric power from the generator is supplied to the capacitor, and the direct-current voltage control is discontinued by the discontinuing means.

3. The power generation system according to claim 1 or 2, further comprising:

   first voltage detecting means for detecting a value of a voltage from the external power supply; and
   first current detecting means for detecting a value of a current from the external power supply.

4. The power generation system according to claim 3, further comprising first calculating means for calculating a value of the electric power and a value of electric energy from the external power supply based on the value of the voltage and the value of the current respectively detected by the first voltage detecting means and the first current detecting means.

5. The power generation system according to any one of claims 1 to 4, further comprising:

   second voltage detecting means for detecting a voltage value of the capacitor; and
   second current detecting means for detecting an output current value of the second power conversion circuit.

6. The power generation system according to claim 5, further comprising second calculating means for calculating a value of electric power and a value of electric energy from the second power conversion circuit based on the voltage value and the output current value respectively detected by the second voltage detecting means and the second current detecting means.

7. The power generation system according to any one of claims 1 to 6, further comprising:

   second voltage detecting means for detecting the voltage value of the capacitor; and
   third current detecting means for detecting an output current value of the rectifier circuit.

8. The power generation system according to claim 7, further comprising third calculating means for calculating a value of electric power and a value of electric energy from the rectifier circuit based on the voltage value and the output current value respectively detected by the second voltage detecting means and the third current detecting means.

9. The power generation system according to any one of claims 3 to 8, further comprising fourth calculating means for calculating a power conversion efficiency value of the first power conversion circuit based on an input electric power value and an output electric power value of the first power conversion circuit.

10. The power generation system according to any one of claims 3 to 9, further comprising transmitting means for transmitting at least one of the values obtained by any of the means to outside the power generation system.

FIG.1

EP 2 451 070 A1

FIG.2

FIG.3

EP 2 451 070 A1

FIG.4

Labels in figure: 310, 50a, 50, 20 System Vd, Pd Load 70, 51 52 53, 15a First power conversion circuit, 15, L, R1 Pout, Pin, 14 Vc, 83, 16 Second power conversion circuit, R2, Pe, Ig, 85, Pg Wg, Vg Rectifier circuit, 13, 12 Generator, Pa, 11 Engine, 10a, 17b Memory, Ve Ie Pe We, 90 External device, 17a, Controller, 317, Processor, First electric power exchanging means Q1, Second electric power exchanging means Q2, Voltage controlling means Q3, Discontinuing means Q4, Second voltage detecting means Q9, Third current detecting means Q13, Third transmitting means Q14, Third calculating means Q15, Third electric power calculating means Q15a, Third electric energy calculating means Q15b

# FIG.5

EP 2 451 070 A1

<table>
<tr><td colspan="2"><strong>INTERNATIONAL SEARCH REPORT</strong></td><td>International application No.<br>PCT/JP2010/059456</td></tr>
</table>

| A. CLASSIFICATION OF SUBJECT MATTER |
|---|
| *H02M7/48*(2007.01)i, *H02J3/38*(2006.01)i, *H02P9/04*(2006.01)i |

According to International Patent Classification (IPC) or to both national classification and IPC

| B. FIELDS SEARCHED |
|---|

Minimum documentation searched (classification system followed by classification symbols)
H02M7/48, H02J3/38, H02P9/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2001-112176 A  (Hitachi, Ltd.),<br>20 April 2001 (20.04.2001),<br>paragraphs [0011] to [0031]; fig. 1 to 7<br>(Family: none) | 1-10 |
| A | JP 2006-280177 A  (Honda Motor Co., Ltd.),<br>12 October 2006 (12.10.2006),<br>paragraphs [0012] to [0021]; fig. 1<br>(Family: none) | 1-10 |
| A | JP 8-186934 A  (Tokyo Gas Co., Ltd.),<br>16 July 1996 (16.07.1996),<br>claims 1 to 11<br>(Family: none) | 1-10 |

☐ Further documents are listed in the continuation of Box C.     ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search<br>16 August, 2010 (16.08.10) | Date of mailing of the international search report<br>24 August, 2010 (24.08.10) |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001258160 A